(19) **Europäisches Patentamt / European Patent Office / Office européen des brevets**

(11) **EP 1 028 562 B1**

(12) **EUROPEAN PATENT SPECIFICATION**

(45) Date of publication and mention
of the grant of the patent:
**02.07.2008 Bulletin 2008/27**

(51) Int Cl.:
*H04L 27/26* (2006.01)    *H04L 25/02* (2006.01)

(21) Application number: **00200488.5**

(22) Date of filing: **14.02.2000**

(54) **Method of timing recovery in multicarrier systems**

Taktrückgewinnung in Mehrträgerverfahren

Méthode de recupération d'horloge dans des systèmes multiporteuse

(84) Designated Contracting States:
**DE FR GB**

(30) Priority: **12.02.1999 US 119832 P**

(43) Date of publication of application:
**16.08.2000 Bulletin 2000/33**

(73) Proprietor: **Texas Instruments Incorporated**
**Dallas, Texas 75251 (US)**

(72) Inventors:
• **Jacobsen, Krista S.**
**San Jose, CA 95138 (US)**
• **Sands, Nicholas P.**
**Menlo Park, CA 94025 (US)**

(74) Representative: **Holt, Michael**
**Texas Instruments Limited**
**European Patents Department**
**800 Pavilion Drive**
**Northampton, NN4 7YL (GB)**

(56) References cited:
**US-A- 5 732 113**

• **VAN DE BEEK J-J ET AL: "Synchronization of a TDMA-OFDM frequency hopping system" VEHICULAR TECHNOLOGY CONFERENCE, 1998. VTC 98. 48TH IEEE OTTAWA, ONT., CANADA 18-21 MAY 1998, NEW YORK, NY, USA, IEEE, US, 18 May 1998 (1998-05-18), pages 1290-1294, XP010287974 ISBN: 0-7803-4320-4**
• **XIAODONG LI ET AL: "Maximum-likelihood estimation of OFDM carrier frequency offset for fading channels" SIGNALS, SYSTEMS & COMPUTERS, 1997. CONFERENCE RECORD OF THE THIRTY-FIRST ASILOMAR CONFERENCE ON PACIFIC GROVE, CA, USA 2-5 NOV. 1997, LOS ALAMITOS, CA, USA,IEEE COMPUT. SOC, US, 2 November 1997 (1997-11-02), pages 57-61, XP010280759 ISBN: 0-8186-8316-3**

**Description**

Field Of The Invention

The present application relates generally to the technical field of digital communication systems and more particularly to a method and apparatus for timing recovery in multi-carrier modulation in such a digital communication system.

Receivers in digital communication systems are usually operable to estimate and track the phase of a clock that generates a transmit signal, so that the receiver sampling is synchronous with the transmit signal. Better efficiency (in terms of channel bandwidth) is obtained when the receiver can extract this timing phase from the information-bearing signal. If multi-carrier modulation (See "A Multicarrier Primer", ANSI T1E1.4/91-157, John M. Cioffi, November, 1991, and, hereinafter referred to as "Cioffi") is used, the information is transferred over a number of subchannels, typically 64-1024. Usually a specific subchannel, called a pilot, is designated for the transfer of timing phase. In some digital communication systems the pilot is reserved for this purpose only, however in others the pilot is also used to transfer information.

These types of communication systems are designed to withstand random noise and interference from other communication systems. The nature of the interference, however, may not be well known. In particular, Very High Rate Digital Subscriber Line (VDSL) (See "Very-high-speed Digital Subscriber Lines", Systems Requirements Document (T1E1.4/98-043R3), American National Standards Institute, operating in unshielded twisted pair (UTP) cable with aerial drop wires is susceptible to interference from Asymmetric Digital Subscriber Line (ADSL), amateur radio and broadcast AM radio. The frequency and strength of the interference is not known in a particular installation. Generally, multi-carrier modulation is a flexible and adaptable method for use in this environment because the modulation scheme adapts to the specific signal, noise and interference conditions present at the time the connection is made. However the choice of pilot subchannel must be made carefully because if strong interference is encountered in this subchannel, further communication may be impossible.

An improvement would be to negotiate the pilot subchannel during the initialization process (See U.S. provisional patent application 60/078,549 entitled "Initializing Communication in Systems using Multi-carrier Modulation", . However this method is difficult because (i) knowledge of signal and interference strengths is needed and if phase lock has not been achieved this might be inconvenient or complicated, and (ii) the negotiation process requires reliable communication between two devices which have not yet phase locked. Solving these problems may be complicated, unreliable or take excessive time.

The extraction of timing phase information (timing recovery) involves two parts. During the initialization process, the characteristics of the channel, noise and interference are not known, however the signals transmitted are arranged in advance. Using these prearranged signals, the receiver must learn the timing phase and frequency of the transmitter. This is known as acquisition.

Once a connection has been established and the channel, noise and interference have been measured, now the signal that is received contains unknown information, upon which decisions are made. The receiver can use supplementary information to maintain phase lock - this is known as tracking.

In the paper, VAN DE BEEK J-J et al "Synchronisation of a TDMA-OFDM frequency hopping system", a system of weighing sub-channels based on signal quality is described. United States Patent No. 5,732,113 describes a method of timing and frequency synchronisation of OFDM signals using two training symbols to obtain full synchronisation within two data frames.

Summary of the Invention

The invention provides a method of extracting timing phase information as set forth in the claims.

Description of the Drawings

The present invention will now be further described by way of example, with reference to the accompanying drawings in which:

Fig. 1 shows a graph illustrating an exemplary angle of approximation;
Fig. 2 depicts a block diagram of an acquisition and tracking system; and
Fig. 3 shows a graph exemplifying frequency error estimate using the acquisition and tracking system.

Detailed Description of the Invention

An acquisition signal (1 symbol) is transmitted repeatedly. The exact signal need not be known at the receiver, although it is preferred that it is uniform p.s.d. over the signal band being used. The only requirement is that it is repeated. An estimate of frequency error is derived from the received signal. This estimate is used to adjust a Numerically Controlled Oscillator at the receiver, which in turn determines the sampling phase.

In tracking mode, timing phase is maintained by using the received signal, together with estimates of the transmitted signal to develop an estimate of the phase error. This information is used to adjust a Numerically Controlled Oscillator at the receiver, which in turn determines the sampling phase.

Consider a multi-carrier modulation scheme (see Cioffi) with $N/2$ carriers, sampling rate $f_s$, and prefix length $p$. Each transmitted symbol $X_k$ is made up of $N/2$ complex variables, and in time domain has time-duration $\dfrac{(N+p)}{f_s}$ .

The $n$-th subcarrier has frequency $\dfrac{nf_s}{N}$ . If a sequence of these symbols is transmitted over a channel with transfer function $H(f)$, the output from the channel will be

$$X_k(n)H(f)\Big|_{f=\frac{nf_s}{N}} = X_k(n)H(n). \qquad (1)$$

Denote combined noise and interference by $\tilde{v}_k(n)$, then the received symbol is given by

$$Y_k(n) = X_k(n)H(n)\tilde{v}_k(n) \quad . \qquad (2)$$

If the sampling frequency error is $\Delta f$, the sampling instant will shift in time by $\Delta f / f_s^2$ each sample, $(N+p)\ \Delta f / f_s^2$ each symbol or for the k-th symbol $\tau_k = k(N+p)\ \Delta f / f_s^2$ . The effect of sampling instant shift is predicted by the time-shift theorem of Fourier Theory (see "The Fourier Transform and its Applications," R.N. Bracewell, 2nd Ed., McGraw-Hill, 1965. Time shift $\tau$ causes phase rotation in the frequency domain $2\pi\tau f$. Accordingly, the $n$-th subcarrier will be rotated by an angle

$$2\pi\tau f \;=\; \frac{2\pi \tau f_s}{N} = \frac{2\pi k(N+p)\Delta f n}{Nf_s}\;.$$

Define

$$\varepsilon = \frac{(N+p)\Delta f}{Nf_s} \qquad (3)$$

and the received symbol is

$$Y_k(n) = X_k(n)H(n)e^{-j2\pi nk\varepsilon} + \tilde{v}_k(n)e^{-j2\pi nk\varepsilon} \;. \qquad (4)$$

Since the noise and interference are not materially affected by the phase rotation we will redefine $v_k(n) = \tilde{v}_k(n)e^{-j2\pi nk\varepsilon}$ and we have for the received signal

$$Y_k(n) = X_k(n)H(n)e^{-j2\pi n k \varepsilon} + v_k(n) . \tag{5}$$

Similar to the development of orthogonal frequency divisional multiplexing (OFDM) frequency offset correction (see "A Technique for Orthogonal Frequency Division Multiplexing Frequency Offset Correction", Paul H. Moose, IEEE Transactions on Communications, Vol. 42, No. 10, October 1994, hereinafter referred to as "Moose") we will estimate $\varepsilon$ given observations of $Y_k(n)$, with the important differences that in this case, the phase rotation caused by the frequency error is proportional to the subchannel frequency index $n$, and the attenuation of the channel $H(f)$, varies substantially over the frequency band of interest. (These differences arise because the OFDM frequency offset correction algorithm disclosed by Moose was developed for an approximately flat, passband channel). Accordingly we arrive at an estimate of $\varepsilon$ for each subchannel (see Equation A.17 of Moose, noting that the notation is changed slightly).

$$\tan(2\pi n \hat{\varepsilon}_k(n)) = \frac{\mathrm{Im}\,[Y_k(n)\overline{Y_{k-1}(n)}]}{\mathrm{Re}\,[Y_k(n)\overline{Y_{k-1}(n)}]} \tag{6}$$

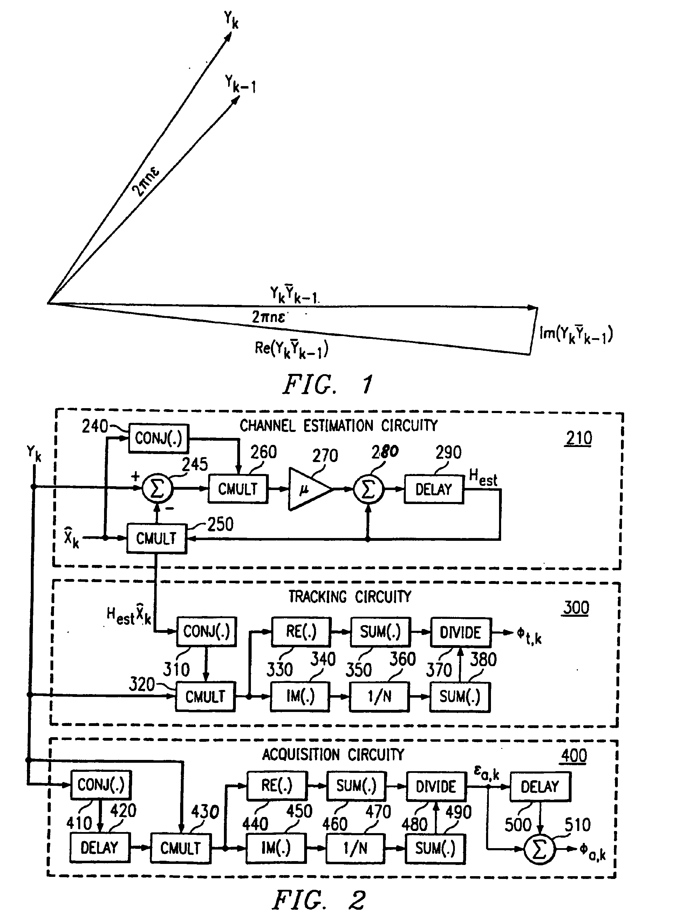

in which $\vec{z}$ denotes the complex conjugate of $z$, and $\hat{\varepsilon}_k(n)$ represents the estimate of frequency error at the $k$-th symbol, in the $n$-th subcarrier. Figure 1 shows a graph illustrating the angle approximation.

Next we will make the approximation that $\tan(2\pi n \varepsilon_k(n)) \approx 2\pi n \varepsilon_k(n)$. This we justify by pointing out that in the VDSL application (or any non-mobile application where crystals are used), we expect frequency error $\varepsilon$ of no more than 100 ppm ($10^{-4}$), and with 256 subcarriers $2\pi n \varepsilon < 0.1608$. Further, we intend to close a phase-lock-loop around this frequency error estimate, so if the loop is in lock the error will be small. Comparing with the exact form $\tan 2\pi n \varepsilon = 0.163$, so we conclude this is a good approximation.

Now we can write

$$\hat{\varepsilon}_k(n) = \frac{\mathrm{Im}\,[Y_k(n)\overline{Y_{k-1}(n)}]}{2\pi n\,\mathrm{Re}\,[Y_k(n)\overline{Y_{k-1}(n)}]} \tag{7}$$

Each of these estimates will have the same expected value, but their variances will vary widely due to the underlying channel attenuation variation with frequency. It seems reasonable to form a weighted sum of these estimates, in which the weights $w_n$ are proportional to the signal to noise ratio in the channel. However, when this algorithm is being used, namely during acquisition, the channel signal-to-noise ratio (SNR) is not known. However if the transmitted signal is computed with certain subcarriers not used (turned "OFF"), the energy detected at the receiver in those subcarriers represents noise and interference. If we presume that the channel attenuation varies smoothly with frequency, the SNR may be estimated by computing the ratio between these unused subcarriers and neighboring frequencies.

Another (simpler) method is to assume that the noise and interference together are uniformly distributed over frequency (white noise approximation). We know that this will be false in many situations, however when averaged over all subcarriers the effect is probably small. If we make the further stipulation that the acquisition signal $X_a(n)$ be uniform across the signal band, a measurement of received power spectral density (p.s.d.) will then provide an estimate of signal to noise ratio. This amounts to weights

$$w_n = \frac{E\,[|Y_k(n)|^2]}{\sum_n E\,[|Y_k(n)|^2]} \tag{8}$$

Since we have to estimate the expectation during the acquisition process, we will need to derive this from observations of $Y_k(n)$. If the acquisition signal $X_a(n)$ is formed from PSK symbols (amplitude independent of data) then the receiver need not know $X_a(n)$ to estimate $E[|Y_n(n)|^2]$, it just needs to measure $|Y_k(n)|^2$.

Note that $|Y_k(n)|^2 = Y_k(n)\overline{Y_k}(n)$ exactly. Then, assuming again that the frequency error is small, phase rotations of $Y_k(n)$ will be small from one symbol to the next, and we can approximate

$$\mathrm{Re}\left[Y_k(n)\overline{Y}_{k-1}(n)\right] \approx Y_k(n)\overline{Y}_k(n) = \left|Y_k(n)\right|^2 \tag{9}$$

so that the weights become

$$w_n = \frac{\mathrm{Re}\left[Y_k(n)\overline{Y}_{k-1}(n)\right]}{\sum\limits_n \mathrm{Re}\left[Y_k(n)\widetilde{Y}_{k-1}(n)\right]}, \tag{10}$$

the frequency error estimate becomes

$$\hat{\varepsilon}_k = \sum_n w_n \hat{\varepsilon}_k(n) = \frac{\sum\limits_n \dfrac{\mathrm{Im}\left[Y_k(n)\overline{Y}_{k-1}(n)\right]}{n}}{2\pi \sum\limits_n \mathrm{Re}\left[Y_k(n)\overline{Y}_{k-1}(n)\right]} \tag{11}$$

this can be integrated to estimate phase error using the recursion

$$\hat{\phi}_{k+1} = \hat{\phi}_k + 2\pi\hat{\varepsilon}_k \quad \mathrm{radians.} \tag{12}$$

In the equations above, we have taken the sum over all subcarriers. However a simplication of the algorithm could be obtained by picking a subset of the subcarriers based on a compromise between computational complexity, channel quality and phase lock loop performance. For example the subset could be chosen based on knowledge that those subcarriers are not in Ham operator or AM radio bands; or only those subcarriers with SNR greater than some threshold. Denote this subset by a set of integers A each member of which represents the index, of a desired subchannel. Then each sum above becomes

$$\sum_{n=\left\{0,\ldots,\frac{N}{2}-1\right\}\in A} (\cdot) \tag{13}$$

After the initial acquisition transient, the error will be small. If the acquisition signal is either arranged in advance or decisions are made assuming a known constellation (for example 4-PSK) the acquisition symbol $X_a$ will be known at the receiver. Then the channel can be estimated recursively

$$\hat{H}_k = (1-\alpha)\hat{H}_{k-1} + \alpha\frac{Y_k}{X_a} \tag{14}$$

Alternatively, the LMS algorithm can be used

$$\hat{H}_{k+1} = \hat{H}_k + \mu\overline{X}_a(Y_k - \hat{H}_k X_a), \tag{15}$$

in which $\alpha$ and $\mu$ are adaptive update gains.

Timing recovery/frequency error estimation usually involves computation of the angle between two complex numbers (vectors). In acquisition, we force the data symbol to be repeated, and we measure the angle between successive symbols and attribute that o sampling frequency offset. The problem in tracking mode is that the data symbol $X_k$ is unknown, and is different each symbol-time. However if there is enough SNR to transfer data reliably (Pr{symbol error} <le-4?) then we can use data decisions at the receiver - estimates of $X_k$ - to form a reference vector with which to compare the received signal vector.

The data decisions $\hat{X}_k$ are multiplied by the channel estimate that was derived during acquisition $\hat{H}(n)$ to form an estimate of the noiseless channel output

$$U_k(n) = \hat{H}(n)\, \hat{X}_k(n) \qquad\qquad (16)$$

A phase rotation between $Y_k(n)$ and $U_k(n)$ will be due to sampling phase error, or from errors in the estimates $\hat{H}$ or $\hat{X}_k$. If we assume that these estimation errors are insignificant - the channel estimate is good enough, and symbol decision errors are infrequent - then the expectation of the angle between $Y_k(n)$ and $U_k(n)$ will represent the phase error, and we can use an estimate of it to drive the tracking phase-lock loop.

Consider

$$E\left[U_k \overline{Y}_k\right] = E\left[H\hat{X}_k \overline{Y}_k\right] = E\left[\hat{H}\hat{X}_k (\overline{HX}_k e^{-j2\pi nk\varepsilon} + v_k)\right] = \hat{H}\hat{X}_k \overline{HX}_k e^{-j2\pi nk\varepsilon} + \hat{H}\hat{X}_k E[v_k] \qquad (17)$$

since $v_k$ is a zero mean, complex Gaussian random variable, (17) reduces to

$$E\left[U_k \overline{Y}_k\right] = \hat{H}\hat{X}_k \overline{HX}_k e^{-j2\pi nk\varepsilon}, \qquad (18)$$

We use the same idea as for acquisition, namely to assume that the angle is small, and weight the subcarrier estimates according to the received channel output, except that now we have phase error estimate

$$\hat{\phi}_k = \frac{\sum_n \dfrac{\text{Im}\left[U_k(n)\overline{Y}_k(n)\right]}{n}}{\sum_n \text{Re}\left[U_k(n)\overline{Y}_k(n)\right]} \quad \text{radians.} (19)$$

Figure 2 shows a preferred embodiment of a timing recovery system 200 in accordance with the present invention. The timing recovery system 200 in Fig. 2 includes a channel estimation circuitry 210, tracking circuitry 300, and acquisition circuitry 400. The channel estimation circuitry 210 accepts as input received symbol $Y_k$ and transmitted signal estimate $\hat{X}_k$. Transmitted signal estimate $\hat{X}_k$ is input into conjugate circuit 240 and complex multiplier circuit 250. The output of the complex multiplier circuit 250 is summed with the received symbol $Y_k$ at summer 245 and input into complex multiplier circuit 260 along with the output of conjugate circuit 240. The output of the complex multiplier circuit 260 in then scaled by an adaptive update gain, $\mu$, at scaler circuit 270. The output of scaler circuit 270 is then summed at summer 280 with delayed channel estimate $H_{est}$. The delayed channel estimate $H_{est}$ is the delayed output of summer 280. The delayed channel estimate $H_{est}$ is also input into complex multiplier circuit 250 and multiplied with the transmitted signal estimate $\hat{X}_k$ which, during a tracking phase of the timing recovery system 200, is input into conjugate circuit 310. The output of the conjugate circuit 310 is then input, along with the received symbol $Y_k$, into complex multiplier circuit 320. The real portion of the output of the complex multiplier circuit 320 is then generated at circuit 330 and provided as input to summer 350. The imaginary portion of the output of the complex multiplier circuit 320 is generated at circuit 340 and then input into the divide-by-n circuit 360. The output of the divide-by-n circuit is input into summer 380. The outputs of summer 350 and summer 380 are then input into divide circuit 370. The output of divide circuit 370 is an estimated

timing phase $\Phi_{t,k}$ for use during tracking mode.

In the acquisition circuit 400, the received symbol $Y_k$ is input into conjugate circuit 410. The output of the conjugate circuit 410 input into delay circuit 420. The delayed output of delay circuit 420 in multiplied in complex multiplier circuit 430 with the received symbol $Y_k$. The real portion of the output of the complex multiplier circuit 430 is generated by circuit 440 and provided as input to summer circuit 460. The imaginary portion of the output of the complex multiplier circuit 430 is generated by circuit 450 and then input into the divide-by-n circuit 470. The output of the divide-by-n circuit 470 is input into summer circuit 460. The outputs of summer circuits 460 and 490 are then input into divide circuit 480. The output of divide circuit 480 is an estimated error $\varepsilon_{a,k}$ which is input into delay circuit 500 and summation 510. A delayed version of the estimated error signal $\varepsilon_{a,k}$ is output from the delay circuit 500 and is also provided as input into summation 510. The sum of the error signal $\varepsilon_{a,k}$ output from the divide circuit 480 and the delayed error signal output from the delay circuit 500 generates timing phase $\Phi_{a,k}$ for use by the timing recovery system 200 during acquisition mode.

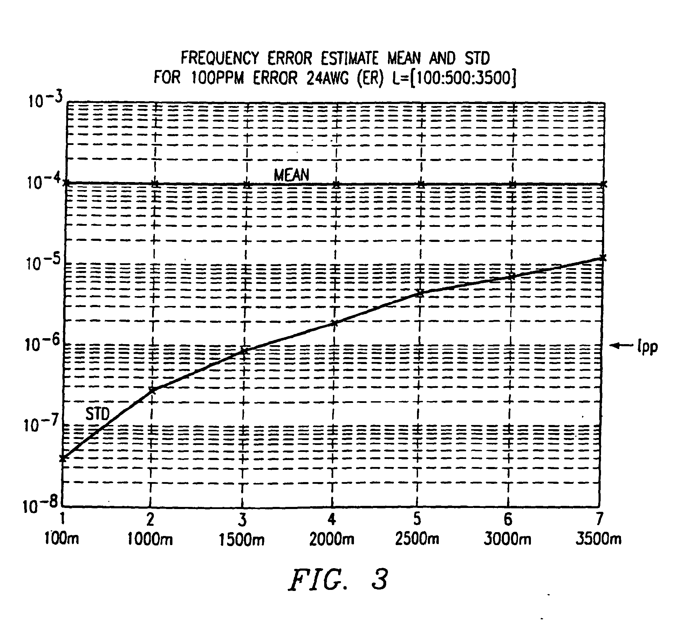

Fig. 3 shows a graph illustrating frequency error estimate mean and standard deviation for one embodiment of a timing recovery system according to the present teachings.

Other Embodiments

Although the present invention and its advantages have been described in detail, it should be understood that various changes, substitutions and alterations can be made herein without departing from the scope of the invention.

**Claims**

1. A method of extracting timing phase information from a received signal in a multi-carrier modulation scheme **characterised by** the steps of:

   transmitting a signal $X(n)$ over a channel, the channel comprising a plurality of sub-channels and the signal within each sub-channel comprising a sequence of symbols $X_k$;
   in an acquisition mode, determining the noise and interference in the channel by determining the strength of the received signal $Y(n)$ in the $n^{th}$ sub-channel, wherein the $n^{th}$ sub-channel is not used to carry the transmitted signal $X(n)$ ;
   determining the strength of the received signal $Y(n \pm p)$ in a neighbouring $(n \pm p)^{th}$ sub-channel, the $(n \pm p)^{th}$ sub-channel carrying the transmitted signal;
   determining an estimated channel signal-to-noise ratio by computing the ratio between the detected signals in the $(n \pm p)^{th}$ sub-channel and the $n^{th}$ sub-channel;
   determining an estimate $\hat{\varepsilon}_k(n)$ of the frequency error of a plurality of the sub-channels;
   determining an estimate of the channel frequency error by forming a weighted sum of the plurality of frequency error estimates $\hat{\varepsilon}_k(n)$, wherein the weights $w_n$ are proportional to the estimated channel signal to noise ratio; and
   adjusting a numerically controlled oscillator at the receiver in accordance with the estimated channel frequency error and determining the sampling phase; and
   in a tracking mode, determining an estimate of the phase error from the received signal and the estimated channel frequency error; and
   adjusting the numerically controlled oscillator at the receiver in accordance with the estimated phase error and determining the sampling phase.

2. A method according to claim 1, wherein the step of determining an estimate of the channel frequency error comprises forming a weighted sum of the plurality of frequency error estimates $\hat{\varepsilon}_k(n)$ of all of the sub-channels.

3. A method according to claim 1, wherein the step of determining an estimate of the channel frequency error comprises forming a weighted sum of the plurality of frequency error estimates $\hat{\varepsilon}_k(n)$ of a subset of the sub-channels.

**Patentansprüche**

1. Verfahren zum Extrahieren von Taktphaseninformationen aus einem empfangenen Signal in einem Mehrträger-Modulationsschema, **gekennzeichnet durch** die folgenden Schritte:

   Übertragen eines Signals $X(n)$ über einen Kanal, wobei der Kanal mehrere Unterkanäle umfasst und das Signal in jedem Unterkanal eine Folge von Symbolen $X_k$ enthält;

in einer Erfassungsbetriebsart Bestimmen des Rauschens und der Störung in dem Kanal **durch** Bestimmen der Stärke des empfangenen Signals *Y(n)* in dem n-ten Unterkanal, wobei der n-te Unterkanal nicht verwendet wird, um das gesendete Signal *X(n)* zu transportieren;

Bestimmen der Stärke des empfangenen Signals *Y(n ± p)* in einem benachbarten *(n ± p)*-ten Unterkanal, wobei der *(n ± p)*-te Unterkanal das gesendete Signal transportiert;

Bestimmen eines geschätzten Kanal-Rauschabstandes **durch** Berechnen des Verhältnisses zwischen den erfassten Signalen in dem *(n ± p)*-ten Unterkanal und dem n-ten Unterkanal;

Bestimmen eines Schätzwertes $\hat{\varepsilon}_k(n)$ des Frequenzfehlers mehrerer der Unterkanäle;

Bestimmen eines Schätzwertes des Kanalfrequenzfehlers **durch** Bilden einer gewichteten Summe der mehreren Frequenzfehler-Schätzwerte $\hat{\varepsilon}_k(n)$, wobei die Gewichte $w_n$ zu dem geschätzten Kanal-Rauschabstand proportional sind; und

Einstellen eines numerisch gesteuerten Oszillators bei dem Empfänger in Übereinstimmung mit dem geschätzten Kanalfrequenzfehler und Bestimmen der Abtastphase; und

in einer Verfolgungsbetriebsart Bestimmen eines Schätzwertes des Phasenfehlers aus dem empfangenen Signal und dem geschätzten Kanalfrequenzfehler; und

Einstellen des numerisch gesteuerten Oszillators bei dem Empfänger in Übereinstimmung mit dem geschätzten Phasenfehler und Bestimmen der Abtastphase.

**2.** Verfahren nach Anspruch 1, wobei der Schritt des Bestimmens eines Schätzwertes des Kanalfrequenzfehlers das Bilden einer gewichteten Summe der mehreren Frequenzfehler-Schätzwerte $\hat{\varepsilon}_k(n)$ aller Unterkanäle umfasst.

**3.** Verfahren nach Anspruch 1, wobei der Schritt des Bestimmens eines Schätzwertes des Kanalfrequenzfehlers das Bilden einer gewichteten Summe der mehreren Frequenzfehler-Schätzwerte $\hat{\varepsilon}_k(n)$ einer Untermenge der Unterkanäle umfasst.

## Revendications

**1.** Procédé de récupération d'information de phase d'horloge à partir d'un signal reçu dans un arrangement de modulation multiporteuse **caractérisé par** les étapes consistant à :

transmettre un signal X(n) sur un canal, le canal comprenant une pluralité de sous-canaux et le signal dans chaque sous-canal comprenant une séquence de symbo le $X_k$ ;

dans un mode d'acquisition, déterminer le bruit et l'interférence dans le canal en déterminant la force du signal reçu Y(n) dans le $n^{\text{ème}}$ sous-canal, où le $n^{\text{ème}}$ sous-canal n'est pas utilisé pour transporter le signal transmis X(n) ;

déterminer la force du signal reçu Y(n ± p) au voisinage du $(n ± p)^{\text{ème}}$ sous-canal, le $(n ± p)^{\text{ème}}$ sous-canal transportant le signal transmis ;

déterminer un rapport signal bruit de canal estimé en calculant le rapport entre les signaux détectés dans le $(n ± p)^{\text{ème}}$ sous-canal et le $n^{\text{ème}}$ sous-canal ;

déterminer une estimation $\hat{\varepsilon}_k(n)$ de l'erreur de fréquence d'une pluralité des sous-canaux ;

déterminer une estimation de l'erreur de fréquence de canal en formant une somme pondérée de la pluralité des estimations d'erreur de fréquence $\hat{\varepsilon}_k(n)$, dans lequel les poids $W_n$ sont proportionnels au rapport signal bruit de canal estimé ; et

ajuster un oscillateur contrôlé numériquement au récepteur selon l'erreur de fréquence de canal estimée et déterminer la phase d'échantillonnage ; et

dans un mode de poursuite, déterminer une estimation de l'erreur de phase à partir du signal reçu et l'erreur de fréquence de canal estimée ; et

ajuster l'oscillateur contrôlé numériquement au récepteur selon l'erreur de phase estimée et déterminer la phase d'échantillonnage.

**2.** Procédé selon la revendication 1, dans lequel l'étape consistant à déterminer une estimation de l'erreur de fréquence de canal comprend la formation d'une somme pondérée de la pluralité des estimations d'erreur de fréquence $\hat{\varepsilon}_k(n)$ de tous les sous-canaux.

**3.** Procédé selon la revendication 1, dans lequel l'étape consistant à déterminer une estimation de l'erreur de fréquence de canal comprend la formation d'une somme pondérée de la pluralité des estimations d'erreur de fréquence $\hat{\varepsilon}_k(n)$ d'un sous-ensemble des sous-canaux.

FIG. 1

FIG. 2

FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 078549 P

- US 5732113 A

**Non-patent literature cited in the description**

- **PAUL H. MOOSE.** A Technique for Orthogonal Frequency Division Multiplexing Frequency Offset Correction. *IEEE Transactions on Communications,* October 1994, vol. 42 (10